# EUROPEAN PATENT SPECIFICATION

(11) **EP 0 689 387 B1**
(45) Date of publication and mention of the grant of the patent: **08.01.1997**
(21) Application number: 93914395.4
(22) Date of filing: 03.06.1993
(51) Int. Cl.: A23K 1/16, A23K 1/18

(54) **FEEDS FOR FISH OR CRUSTACEANS**
FISCH- UND KREBSTIERFUTTER
ALIMENTS POUR POISSONS OU CRUSTACES

(30) Priority: 11.03.1993 GB 9305033
(43) Date of publication of application: 03.01.1996
(73) Proprietor: ISP INVESTMENTS INC., Wilmington, Delaware 19801 (US)
(72) Inventor: DESSEN, Arne, West Wimbledon, London SW20 8AN (GB)
(74) Representative: Ford, Michael Frederick
(86) International application number: US9305361
(87) International publication number: WO9419965

(56) References cited:
- DE-A- 2 036 106
- GB-A- 1 269 975
- US-A- 4 826 691
- DATABASE WPI Week 7819, Derwent Publications Ltd., London, GB; AN 78-34172A &
- DATABASE WPI Week 9238, Derwent Publications Ltd., London, GB; AN 92-312371 &
- Commonwealth Agricultural Bureaux, abstract no. 911431998, 7AO17-02147, Poultry Abs, J. ZHANG et al. : "Effects of dietary polyvinyl polypyrrolidone as a growth promotant in chickens",

## Description

The present invention relates to binder materials used in the manufacture of feeds suitable for use in the farming of fish and/or crustaceans.

It is customary to manufacture fish foods in the form of discrete granules or pellets so as to facilitate handling of the foods, reduce dust and wastage and control the food particle size and density. For the manufacture of such fish foods it has been conventional for many year to incorporate a polymeric binder material as a part of the composition.

Lignosulphonate is widely used as a binder, notably in the pelleting of start feeds (for very young, fast growing fish). Alginates and guar gum are also used, generally as binders in moist feeds for larger fish. Although all three of these are materials which are generally regarded as benign, it has been known for some years that they do interfere to some extent with digestion of the foodstuffs by the fish. This has however been accepted for the sake of manufacturing the feeds in particulate form. Starch is also used, notably in extruded fish feeds for larger fish, but is less effective as a binder so that a substantial amount is required. It has been used at levels of about 20%, and it provides an energy source in the feed, but such levels of starch do no resemble the natural diet of the fish. Consequently it has been regarded as desirable to reduce the amount of starch to lower levels.

In other prior art, US-A-4826691 shows a free-flowing, powdered material containing an attractant (which may be fish meal) and a binder (which may be an unspecified PVP). The material is for use on a lure, being adhered by moisture to the body of the lure to form a film which slowly dissolves away, attracting fish.

In JP-A-4217922 a pelleted inoculant is disclosed. It is made up of "dead fungus body" with a binder which may be an unspecified PVP.

By contrast with this accepted practice the present invention provides pelleted feeds suitable for use in the farming of fish or crustaceans in which specific polymers or copolymers of vinylpyrrolidone are incorporated as the binder material for a foodstuff which is at least partly fish meal. Thus a feed in accordance with this invention will contain a mixture of foodstuffs edible by fish and/or crustaceans together with a polymer or copolymer of vinylpyrrolidone having a K-value of 15 to 120, present in an amount of 0.5 to 10% by weight of the pellets.

It has been found that such polymers give satisfactory binding properties and that the pellets containing them give significantly improved growth and reduced mortality of the fish.

The polymer may be homopolymer or copolymer of vinylpyrrolidone and may be a linear polymer. If the polymer is a copolymer it may be preferred that at least 50% or even at least 80% of the monomer units are vinylpyrrolidone.

Polyvinylpyrrolidone homopolymer (PVP) is commercially available with various chain lengths and hence various molecular weights. These different grades of polyvinylpyrrolidone are often identified by K-values which are a measure of viscosity and hence are related to the molecular weight and degree of polymerisation in the polymer. For the present invention the polymers have a K-value of at least 15, up to 120. It is preferred to employ polymers with a K-value in the range 20-100.

The foodstuffs incorporated into the particular fish foods of this invention may be those which are normally used for other particulate fish foods. Frequently fish meal will provide at least 30% of the formulation and often it will provide at least 50% of the formulation.

Particulate fish foods are customarily manufactured by three routes, all of which involve some form of extrusion through a die. The methods are normally classified as compressed pelleting (also known as steam pelleting) extruded pelleting and moist pelleting.

In compressed pelleting the mixture of foodstuffs is exposed to dry steam, which heats it and increases the moisture content, after which it is forced through holes in a die by means of a roller inside the die. The mixture is compressed during this passage through the die; the compressed extrudate is chopped to size as it leaves the die.

Extrusion pelleting also uses an extrusion step, but the heated mixture is at markedly higher pressure upstream of the die than downstream of the die. This leads to expansion and evaporation of moisture as the mixture leaves the extrusion die, causing the formation of voids and reducing the density of the pellets.

Moist pelleting entails the extrusion of a wet mixture into noodles which are then cut to size. Vinylpyrrolidone polymers can be used as binder in all three of these processes, adding the binder to the mixture of foodstuffs before extrusion of the mixture, in generally the same manner as with binder materials used hitherto. For extruded pellets it is convenient to mix the vinylpyrrolidone polymer with water and then mix the resulting solution or dispersion with the foodstuffs. For moist pelleting the polymer can be added in powder form while mixing the foodstuffs.

The amount of polymer incorporated into a fish food will generally lie in a range from 0.5 to 10% by weight of the composition, preferably from 1 to 8% by weight. mean particle size of a particulate fish food may be as small as 0.1mm, preferably at least 0.2mm, while pellets may have dimensions up to 20mm.

Feeds embodying the present invention may be used in the farming of both crustaceans and vertebrate fish, both in fresh and salt water.

The invention will now be illustrated further by the following Example and comparative example.

### Example

Four fish feeds for salmon fry were prepared by the compressed pelleting technique. They had compositions as set out in the following Table 1. As can be seen from the Table the feeds contained either 2% or 5% by weight of a binder material which was either lignosulphonate or polyvinylpyrrolidone. The polyvinylpyrrolidone was a linear homopolymer of vinylpyrrolidone having a K-value of approximately 30 and available as Plasdone K-29/32 from International Specialty Products, Wayne, New Jersey, USA.

The pellets made with polyvinylpyrrolidone were found to be satisfactory in strength and hardness. They appeared to be at least as hard as pellets made using an equal amount of lignosulphonate as the binder.

Four directly analogous feeds were prepared in the same way using modified proportions of the foodstuffs but the same amounts of binders so as to produce fish foods with a reduced fat content (12% fat as % dry matter).

Feeds were used for comparative experiments in which the feeds were used as the sole feed for Atlantic salmon fry in fresh water over a period of 112 days. Salmon fry were selected as the fish for use in these comparative experiments because they are one of the most sensitive species towards feed ingredients in the start feeding phase.

For this experiment Atlantic salmon fry with an initial average weight of 0.2 gram were maintained in non-metallic tanks and supplied with fresh water at 10-12°C which initially held six hundred fish per tank. The feed was delivered automatically to the tank every ten minutes, 24 hours per day, at a feed rate expected to provide the fish with an excess of food. Dead fish were removed from the tanks and counted daily. At 28 day intervals 15 fish were removed from each tank and their body composition was determined by analysis. At the end of the experiment histological examinations of liver, kidney and gastro-intestinal system were carried out on groups of 30 fish fed with each diet.

Each of the fish feeds set out in Table 1 above was used as sole feed for a group of three tanks of fish during the second, third and fourth periods of 28 days in the experiment. During the first 28 day period the corresponding fish feeds with 12% fat content were used.

Results from the experiment are set out in the following Table 2 where
"final weight" denotes the mean weight of live fish at the end of each 28 day period,
"BWI" denotes the mean body weight increase per fish expressed as a percentage of final weight,
"feed:gain ratio" is the weight of feed supplied divided by the increase in weight of the surviving fish.

Experimental error values are values of the "standard error of the mean" which is the standard deviation divided by the square root of the number of observations.

**Table 1**

| Formulation and chemical composition of the diets. | | | | |
|---|---|---|---|---|
| Formulation, % by weight | Diet 1 | Diet 2 | Diet 3 | Diet 4 |
| Fish meal¹ | 67.3 | 65.4 | 67.3 | 65.4 |
| Extruded Wheat | 12.8 | 12.4 | 12.8 | 12.4 |
| Fish oil² | 11.0 | 11.0 | 11.8 | 11.0 |
| "Finnstim"³ | 4.7 | 4.9 | 4.7 | 4.9 |
| Soya Lecithin⁴ | 0.9 | 0.8 | 0.9 | 0.8 |
| Vitamin- and micro-mineral-mix⁵ | 0.5 | 0.5 | 0.5 | 0.5 |
| Lignosulphonate⁶ | 2.0 | 5.0 | 0 | 0 |
| PVP⁷ | 0 | 0 | 2.0 | 5.0 |

| Chemical composition | | | | |
|---|---|---|---|---|
| Dry matter (DM), % | 90.8 | 90.8 | 90.9 | 90.8 |
| Protein, % DM | 47.7 | 45.2 | 48.1 | 48.3 |
| Starch, % DM | 20.4 | 20.3 | 18.6 | 19.1 |
| Fat, % DM | 20.4 | 19.9 | 20.1 | 20.0 |

| | | | | |
|---|---|---|---|---|
| ¹Norse LT-94. Norsildmel, Bergen, Norway. | | | | |
| ²NorSalmoil. Norsildmel, Bergen, Norway. | | | | |
| ³Betain-rich byproduct from sugar production. Finsugar, Finland. | | | | |
| ⁴Nutripur. Lucas Meyer, Hamburg, Germany. | | | | |
| ⁵Storebakken and Austreng (1978b). | | | | |
| ⁶Borrebond. Borregaard Fabrikker, Sarpsborg, Norway. | | | | |
| ⁷Plasdone K-29/32. ISP, Wayne, NJ. USA. | | | | |

**Table 2**

| Growth, feed conversion and mortality of the salmon fry during the experiment | | | | |
|---|---|---|---|---|
| 0-28 days | Diet 1 | Diet 2 | Diet 3 | Diet 4 |
| Final weight | 0.39±0.01^{b} | 0.28±0.02^{c} | 0.44±0.02^{a} | 0.46±0.01^{a} |
| BWI, %d⁻¹ | 3.22±0.14^{b} | 1.45±0.40^{c} | 4.10±0.30^{a} | 4.52±0.16^{a} |
| Feed:gain ratio, g/g | 1.9±0.15 | >10 | 1.2±0.09 | 1.1±0.06 |
| Mortality, % | 4.0±1.74^{b} | 24.5±3.11^{a} | 3.1±0.15^{c} | 5.4±2.06^{c} |
| Cumulative survival, % | 86.0±1.74^{b} | 75.5±3.11^{a} | 96.9±0.15^{c} | 94.6±2.06^{c} |

| 29-56 days | | | | |
|---|---|---|---|---|
| Final weight | 1.20±0.06^{a} | 0.84±0.02^{b} | 1.21±0.04^{a} | 1.25±0.01^{a} |
| BWI, %d⁻¹ | 6.70±0.30 | 5.97±0.22 | 6.34±0.09 | 6.55±0.22 |
| Feed:gain ratio g/g | 1.3±0.07^{b} | 2.9±0.08^{a} | 1.1±0.03^{c} | 1.0±0.00^{c} |
| Mortality, % | 2.7±0.87^{b} | 13.5±1.20^{a} | 1.6±0.36^{b} | 1.2±0.36^{b} |
| Cumulative survival, % | 83.2±1.44^{b} | 65.3±3.22^{a} | 95.4±0.27^{c} | 93.4±2.18^{c} |

| 57-84 days | | | | |
|---|---|---|---|---|
| Final weight | 2.28±0.10^{a} | 1.42±0.02^{b} | 2.36±0.06^{a} | 2.61±0.06^{a} |
| BWI, %d⁻¹ | 3.14±0.04^{a} | 1.97±0.47^{b} | 3.41±0.04^{a} | 3.34±0.15^{b} |
| Feed:gain ratio, g/g | 2.5±0.13^{b} | 8.3±1.41^{b} | 1.9±0.07^{c} | 1.0±0.09^{c} |
| Mortality, % | 0.1±0.87^{b} | 2.1±1.46^{a} | 0.6±0.16^{b} | 0.4±0.10^{a} |
| Cumulative survival, % | 83.2±1.44^{b} | 64.4±3.69^{a} | 94.8±0.15^{c} | 93.0±0.15^{c} |

| 85-112 days | | | | |
|---|---|---|---|---|
| Final weight | 3.58±0.25^{a} | 1.89±0.21^{b} | 3.95±0.11^{a} | 4.04±0.01^{a} |
| BWI, %d⁻¹ | 2.02±0.16 | 0.95±0.54 | 2.41±0.03 | 2.43±0.12 |
| Feed:gain ratio, g/g | 3.45±0.08^{b} | 9.9±1.01^{a} | 2.24±0.09^{b} | 2.10±0.05^{b} |
| Mortality, % | 0.0±0.00^{b} | 0.9±0.14^{a} | 0.1±0.06^{b} | 0.0±0.00^{b} |
| Cumulative survival, % | 83.2±1.44^{b} | 63.8±3.63^{a} | 94.7±0.19^{c} | 93.0±2.03^{c} |

In Table 2 above the superscripts a, b and c are used in each horizontal row of the Table to separate the results into groups which are significantly different from each other. Thus for example in the first line of the Table giving final weight of fish after 28 days the final weights for fish fed with diet 3 and 4 are not significantly different from each other, but are both significantly greater than the final weight of fish fed with diet 1 which in turn was significantly greater than the final weight for fish fed with diet 2.

As can be seen from Table 2, growth during the start period (the first 28 days) was significantly better for fish fed with diets 3 and 4, which used PVP as binder, than for those fed with diets 1 and 2. In subsequent periods fish fed with diet 2 containing the higher level (5%) of lignosulphonate grew less than those fed with the other diets.

The feed conversion rates, expressed by the feed:gain ratio, were remarkably good for the fish fed with diets 3 and 4 which used PVP as binder. They were significantly better at all stages of the experiment than those for diet 2 with 5% lignosulphonate, and significantly better than those for diet 1, with 2% lignosulphonate, in all but the last 28 day period.

The low values of the feed:gain ratio observed in the second 28 day period led to some doubt as to whether the amount of feed was in fact satiating the fish as intended. The amount of feed was therefore increased for all four diets during the last two 28 day periods. It was increased from 120% of the predicted amount to 130% of the amount predicted to satiate the fish.

The high growth rate of fish fed on diets 3 and 4 was accompanied by high survival. Fish on diet 1 (2% lignosulphonate) suffered significantly higher mortality in the start period while throughout the experiment those fish on diet 2 (5% lignosulphonate) showed significantly higher mortality than those fish fed with diets 3 or 4.

Table 3 shows the body composition of fish sampled during the experiment (chemical analysis carried out as described by Storebakken and Austreng (1987 Aquaculture, 60: 189-206)).

**Table 3**

| Body composition (as% of total wet weight of whole fish) of the salmon fry during the experiment | | | | |
|---|---|---|---|---|
| 28 days | Diet 1 | Diet 2 | Diet 3 | Diet 4 |
| Dry matter | 17.9±0.06^{a} | 17.0±0.26^{b} | 18.2±0.15^{b} | 18.1±0.27^{a} |
| Protein | 12.1±0.06 | 12.4±0.43 | 12.5±0.25 | 12.7±0.34 |
| Fat | 2.7±0.07^{a} | 2.1±8.14^{b} | 2.8±0.23^{a} | 2.7±0.10^{a} |
| Ash | 1.6±0.03 | 1.7±0.08 | 1.7±0.03 | 1.8±0.01 |

| 56 days | | | | |
|---|---|---|---|---|
| Dry matter | 22.2±0.03^{a} | 20.8±0.05^{b} | 21.8±0.16^{a} | 21.9±0.21^{a} |
| Protein | 12.8±0.07 | 12.7±0.06 | 12.9±0.10 | 12.9±0.07 |
| Fat | 6.2±0.09^{a} | 5.0±0.11^{b} | 6.2±0.13^{a} | 6.1±0.11^{a} |
| Ash | 1.9±0.02^{a} | 1.9±0.01^{a} | 1.8±0.01^{b} | 1.8±0.02^{ab} |

| 84 days | | | | |
|---|---|---|---|---|
| Dry matter | 22.5±1.88 | 24.0±0.25 | 24.7±0.14 | 24.7±0.39 |
| Protein | 14.0±0.14 | 14.0±0.09 | 14.1±0.06 | 13.9±0.13 |
| Fat | 7.4±0.07^{a} | 6.9±0.15^{a} | 7.7±0.15^{a} | 7.8±0.26^{a} |
| Ash | 2.1±0.07 | 2.2±0.01 | 2.1±0.03 | 2.1±0.04 |

| 112 days | | | | |
|---|---|---|---|---|
| Dry matter | 25.6±0.07^{a} | 25.0±0.20^{b} | 25.8±0.25^{a} | 25.7±00.10^{a} |
| Protein | 14.4±0.35 | 14.7±0.06 | 14.8±0.13 | 16.4±0.13 |
| Fat | 7.7±0.11^{b} | 7.2±0.16^{c} | 8.0±0.14^{ab} | 8.1±0.10^{a} |
| Ash | 2.2±0.03^{b} | 2.3±0.04^{a} | 2.2±0.03^{b} | 2.2±0.05^{b} |

In general, fish fed with diet 2 had a leaner body composition than the other groups of fish. This corresponded to the lower body weight and growth levels.

In the histological examinations at the end of the experiment haemocrit values for the blood of fish fed with diets 3 and 4 were somewhat higher than the haemocrit values for blood from fish fed with the diets 1 and 2 containing lignosulphonate although the only comparison which was statistically significant was diets 3 and 4 against diet 2.

In the examination of intestine and kidney no systemic local toxic effects were observed for any of the four groups of fish. When examining the livers of fish some variation was found between individuals but the occurrence of pathological features was in any event at a low level.

From these results it can be seen that the feeds containing polyvinylpyrrolidone as binder at both 2% and at 5% levels gave significantly increased feed conversion, growth and survival rates, especially in the start period, compared to the feeds containing lignosulphonate as binder.

## Claims

1. A particulate material containing fish meal and a polyvinylpyrrolidone binder characterized in that the material is a fish food in the form of pellets, and in that the binder is a vinylpyrrolidone having a K-value of 15 to 120 which is present in an amount of 0.5 to 10% by weight of the pellets and is distributed through the pellets so as to give them strength and hardness in water.

2. A material according to claim 1 wherein the polymer is linear polyvinylpyrrolidone homopolymer with a K-value in the range 20-100.

3. A material according to claim 1 or claim 2 which comprises at least 30% fish meal.

4. A material according to any preceding claim wherein the amount of said polymer is from 1 to 8% by weight of the particles.

5. A method of farming fish or crustaceans, characterised by repeatedly feeding the fish or crustaceans with a particulate material as claimed in any of the preceding claims.

6. Use of polyvinylpyrrolidone of a K-value of 15 to 120 as a binder material in a pelletized food for fish or crustaceans, in which the pellets contain foodstuffs at least part of which are fish meal, the binder being distributed throughout the pellets in an amount from 0.5 to 10% by weight of the pellets to give the pellets strength and hardness in water.

7. A method of growing fish and crustaceans in water comprising feeding the fish or crustaceans with a pelleted foodstuff composition which includes 30% fish meal and 0.5 to 10% by weight polyvinylpyrrolidone having a K-value of 15 to 120 to bind said foodstuff in the form of a pellet of sufficient strength and hardness in water to enable the fish or crustaceans to feed effectively on said composition during at least their early growth stage.

8. A method according to claim 7 wherein the K-value of the polyvinylpyrrolidone is 20 to 100.

## Patentansprüche

1. Teilchenmaterial, das Fischmehl und ein Polyvinylpyrrolidon-Bindemittel enthält, dadurch gekennzeichnet, daß das Material ein Fischfutter in Form von Pellets ist und daß das Bindemittel ein Vinylpyrrolidon mit einem K-Wert von 15 bis 120 ist, das in einer Menge von 0,5 bis 10 Gew.-% der Pellets vorhanden und in den Pellets verteilt ist, sodaß diesen Festigkeit und Härte in Wasser verliehen wird.

2. Material nach Anspruch 1, worin das Polymer ein lineares Polyvinylpyrrolidon-Homopolymer mit einem K-Wert im Bereich von 20-100 ist.

3. Material nach Anspruch 1 oder 2, das zumindest 30% Fischmehl umfaßt.

4. Material nach einem der vorangegangenen Ansprüche, worin die Menge des Polymers 1 bis 8 Gew.-% der Teilchen ausmacht.

5. Verfahren zum Züchten von Fischen oder Krustentieren, dadurch gekennzeichnet, daß die Fische oder Krustentiere wiederholt mit einem Teilchenmaterial nach einem der vorangegangenen Ansprüche gefüttert werden.

6. Verwendung von Polyvinylpyrrolidon mit einem K-Wert von 15 bis 120 als Bindematerial in einem pelletierten Futter für Fische oder Krustentiere, wobei die Pellets Nährstoffe enthalten, wovon zumindest ein Teil aus Fischmehl besteht, wobei das Bindemittel in den Pellets in einer Menge von 0,5 bis 10 Gew.-% der Pellets verteilt ist, um den Pellets Festigkeit und Härte in Wasser zu verleihen.

7. Verfahren zum Züchten von Fischen und Krustentieren in Wasser, umfassend das Füttern der Fische oder Krustentiere mit einer pelletierten Nährstoffzusammensetzung, die 30% Fischmehl und 0,5 bis 10 Gew.-% Polyvinylpyrrolidon mit einem K-Wert von 15 bis 120 umfaßt, um den Nährstoff in Form eines Pellets mit ausreichender Festigkeit und Härte in Wasser zu binden, damit die Fische oder Krustentiere zumindest während ihres frühen Wachstumsstadiums sich ausreichend von der Zusammensetzung ernähren können.

8. Verfahren nach Anspruch 7, worin der K-Wert des Polyvinylpyrrolidons 20 bis 100 beträgt.

## Revendications

1. Matériau particulaire contenant un repas de poissons et un liant polyvinylpyrrolidone caractérisé en ce que le matériau est une nourriture pour poisson sous la forme de pastilles, et en ce que le liant est une vinylpyrrolidone ayant une valeur K de 15 à 120 qui est présente en une quantité de 0,5 à 10% en poids des pastilles et est distribuée au travers des pastilles de sorte à leur conférer une résistance et une dureté dans l'eau.

2. Matériau selon la revendication 1 dans lequel le polymère est un homopolymère de polyvinylpyrrolidone avec une valeur K dans l'intervalle de 20 à 100.

3. Matériau selon la revendication 1 ou la revendication 2 qui comprend au moins 30% de repas de poissons.

4. Matériau selon l'une quelconque des revendications précédentes dans lequel la quantité dudit polymère est de 1 à 8% en poids des particules.

5. Méthode d'élevage de poissons ou de crustacés, caractérisée par une alimentation répétitive des poissons ou des crustacés avec un matériau particulaire selon l'une quelconque des revendications précédentes.

6. Utilisation d'une polyvinylpyrrolidone d'une valeur K de 15 à 120 en tant que matériau liant dans un aliment pastillé pour poissons ou crustacés, dans laquelle les pastilles contiennent des aliments dont au moins une partie sont un repas de poissons, le liant étant distribué au travers des pastilles en une quantité de 0,5 à 10% en poids des pastilles pour donner aux pastilles une résistance et une dureté dans l'eau.

7. Méthode de croissance de poissons et de crustacés dans l'eau comprenant l'alimentation des poissons ou des crustacés avec une composition d'aliments pastillés qui inclut 30% de repas de poissons et 0,5 à 10% en poids de polyvinylpyrrolidone ayant une valeur K de 15 à 120 pour lier ledit aliment sous la forme d'une pastille de résistance et dureté suffisante dans l'eau pour permettre aux poissons ou aux crustacés de s'alimenter efficacement avec ladite composition pendant au moins leur étape de croissance précoce.

8. Méthode selon la revendication 7 dans laquelle la valeur K de la polyvinylpyrrolidone est de 20 à 100.
